Europäisches Patentamt

European Patent Office

Office européen des brevets

(11) Numéro de publication: **0119128**
**B1**

(12) **FASCICULE DE BREVET EUROPEEN**

(45) Date de publication du fascicule du brevet:
19.11.87

(51) Int. Cl.⁴: **G 02 B 27/00**

(21) Numéro de dépôt: **84400395.4**

(22) Date de dépôt: **28.02.84**

(54) **Viseur tête haute.**

(30) Priorité: 07.03.83 FR 8303699

(43) Date de publication de la demande:
19.09.84 Bulletin 84/38

(45) Mention de la délivrance du brevet:
19.11.87 Bulletin 87/47

(84) Etats contractants désignés:
**DE FR GB SE**

(56) Documents cités:
**EP - A - 0 009 332**
**EP - A - 0 077 193**
**FR - A - 1 589 907**
**FR - A - 2 017 377**
**FR - A - 2 037 611**
**FR - A - 2 441 191**
**US - A - 4 383 740**

**MACHINE DESIGN, vol. 52, no. 18, août 1980, pages 36-38, Cleveland, Ohio, US; N.HACKENSACK: "Scanning the field for ideas"**

(73) Titulaire: **THOMSON-CSF, 173, Boulevard Haussmann, F-75379 Paris Cédex 08 (FR)**

(72) Inventeur: **Boyer, Claude, THOMSON-CSF SCPI 173, bld Haussmann, F-75379 Paris Cedex 08 (FR)**
Inventeur: **Gauthier, François-Hugues, THOMSON-CSF SCPI 173, bld Haussmann, F-75379 Paris Cedex 08 (FR)**
Inventeur: **Gerbe, Jean-Pierre, THOMSON-CSF SCPI 173, bld Haussmann, F-75379 Paris Cedex 08 (FR)**

(74) Mandataire: **Trocellier, Roger et al, THOMSON-CSF SCPI 19, avenue de Messine, F-75008 Paris (FR)**

## Description

La présente invention concerne un dispositif de visualisation permettant d'observer une image synthétique collimatée et superposée à la vision naturelle du paysage. Ces dispositifs, généralement utilisés à bord d'aéronefs, sont souvent désignés par l'appelation viseur tête haute, ou HUD (abréviation de head-up display), par opposition à la vision tête basse d'un appareil sur la planche de bord.

L'invention est plus particulièrement envisagée pour une utilisation aéroportée, notamment sur un hélicoptère, pour y constituer tout aussi bien un viseur de tir qu'un instrument de pilotage c'est-à-dire un collimateur de vol.

Ces appareils comportent généralement une optique de combinaison d'images pour transmettre vers l'observateur le rayonnement provenant du paysage et pour réfléchir vers l'observateur le rayonnement correspondant à une image synthétique à visualiser. Celle-ci est produite par un montage collimateur optique comprenant un objectif optique et des objets lumineux représentant les symboles à visualiser et qui sont positionnés dans le plan focal de l'objectif. Pour ce faire, les moyens générateurs d'objets lumineux utilisent généralement un tube cathodique, la figuration de symboles représentée sur l'écran étant renvoyée à l'infini par l'objectif.

Selon des solutions conventionnelles, l'optique de combinaison consiste en une glace partiellement transparente, ou plusieurs glaces parallèles pour accroître la pupille optique et donc le champ instantané sans changer le diamètre de l'optique collimatrice.

Dans ces matériels, le tube cathodique avec des circuits associés (alimentation, balayage...), et l'optique de collimation sont maintenus dans un boîtier auquel se trouve par ailleurs mécaniquement rattaché l'optique de combinaison d'images. Ce boîtier, ainsi que les montants mécaniques qui supportent l'optique de combinaison, présentent un masque qui peut être important, la cause principale étant l'encombrement du boîtier. On se rend bien compte que cet effet de masque peut devenir très gênant pour l'exploitation s'il se situe dans le champ de vision de l'observateur.

D'autre part, côté aéronefs, les hélicoptères essentiellement se caractérisent par une grande verrière et des conditions de vol, en vol tactique notamment, telles que l'on doit chercher à minimiser le masque introduit par un dispositif de visée tête haute, même pour une implantation dans la partie haute de la cabine.

Le but de l'invention est de réaliser un viseur tête haute répondant à ces exigences en étant adapté à la configuration de la cabine de l'aéronef où il se trouve implanté, en sorte que le masque qu'il produit pour l'observateur se trouve quasi-totalement confondu avec un masque naturel existant dans la cabine, ce qui revient à produire un viseur pratiquement sans masque et ne limitant donc pas le champ d'observation. Le viseur est plus particulièrement envisagé pour être installé dans la partie supérieure de la cabine.

Suivant des techniques connues en matière de viseurs, un réflecteur sphérique constitue l'optique de collimation. Suivant l'utilisation dite «sur l'axe», l'optique sphérique réfléchissante est située au dessus d'une glace partiellement réfléchissante qui assure la combinaison d'images.

Une technique de ce genre est connue par le brevet français publié sous le n° 2 037 611 et concerne le dispositif optique et son application à un viseur tête haute, monté en position haute. Le dispositif optique comporte deux miroirs partiellement transparents, l'un sphérique et l'autre plan, dont les extrémités inférieures sont rapprochées et les extrémités supérieures distantes, en sorte de collimater des données lumineuses et permettre leur observation superposée avec la vision du paysage extérieur. Des moyens électroniques extérieurs à l'optique produisent les données à visualiser; ils sont placés dans un boîtier supportant l'ensemble optique et qui est fixé au véhicule porteur.

Suivant d'autres solutions quasi-axiales des optiques holographiques correspondantes sont utilisées, comportant un premier élément diffracteur réalisé à l'aide d'un verre sphérique et au moins un deuxième élément diffracteur réalisé avec un verre plan, l'ensemble assurant les fonctions de collimation et de combinaison d'images.

Un système de ce genre est décrit dans la publication European Patent Application 0 009 332. Le viseur tête haute est prévu pour une exploitation en position basse, le tube cathodique étant monté sur la planche de bord. Le bloc optique constitué par les deux éléments optiques holographiques se trouve essentiellement placé dans le champ visuel d'observation et est rigidement fixé par le bas et latéralement au boîtier et à la planche de bord.

Cette solution n'est guère transposable telle quelle pour les besoins d'une exploitation en position haute, notamment à bord d'un hélicoptère compte-tenu d'un effet de masque important. Le module optique comporte l'élément diffracteur sphérique et l'élément diffracteur plan assemblés de manière à présenter en coupe transversale une structure sensiblement triangulaire, formant chacun un côté d'un triangle dont le troisième côté est constitué par un élément support mécanique ou une partie du boîtier. Cette solution ne permet pas une utilisation sur l'axe; le rayonnement issu du tube cathodique doit traverser le miroir sphérique puis être réfléchi deux fois, par le miroir plan puis par le miroir sphérique, avant de traverser finalement le miroir plan.

Selon l'invention, il est proposé de réaliser un viseur tête haute du genre décrit dans le brevet n° 2 037 611 et dans lequel les extrémités inférieures sont assemblées par une pièce de faible épaisseur, les extrémités supérieures étant couplées mécaniquement au boîtier par l'intermédiaire d'une pièce de liaison également de faible épaisseur contenue dans un plan passant par les extrémités supérieures et qui coupe l'axe optique en un point d'observation correspondant au centre du miroir sphérique en sorte d'utiliser celuici sur l'axe et de n'avoir pratiquement aucun effet de masque par les moyens optiques dans le champ d'observation situé au-dessous de cette plaque, lesdits moyens électroniques étant, au moins partiellement, contenus dans ledit boîtier dont la forme est prédéterminée pour être situé dans un espace déjà masqué pour l'observation du paysage à partir dudit centre, par la présence d'une pièce opaque appartenant au véhicule porteur.

Les particularités et avantages de la présente invention apparaîtront dans la description qui suit donnée à titre d'exemple à l'aide des figures annexées qui représentent:
- Fig. 1, un viseur tête haute conforme à l'invention monté dans une cabine d'un hélicoptère;
- Figs 2 et 3, le viseur tête haute de la Fig. 1 en vue d'élevation et en vue latérale respectivement;
- Fig. 4, un schéma partiel relatif à une variante de montage du tube cathodique du viseur de la Fig. 1;
- Figs 5A et 5B, des schémas relatifs aux trajets du rayonnement de l'image à collimater et de celui provenant de la scène extérieure, respectivement.

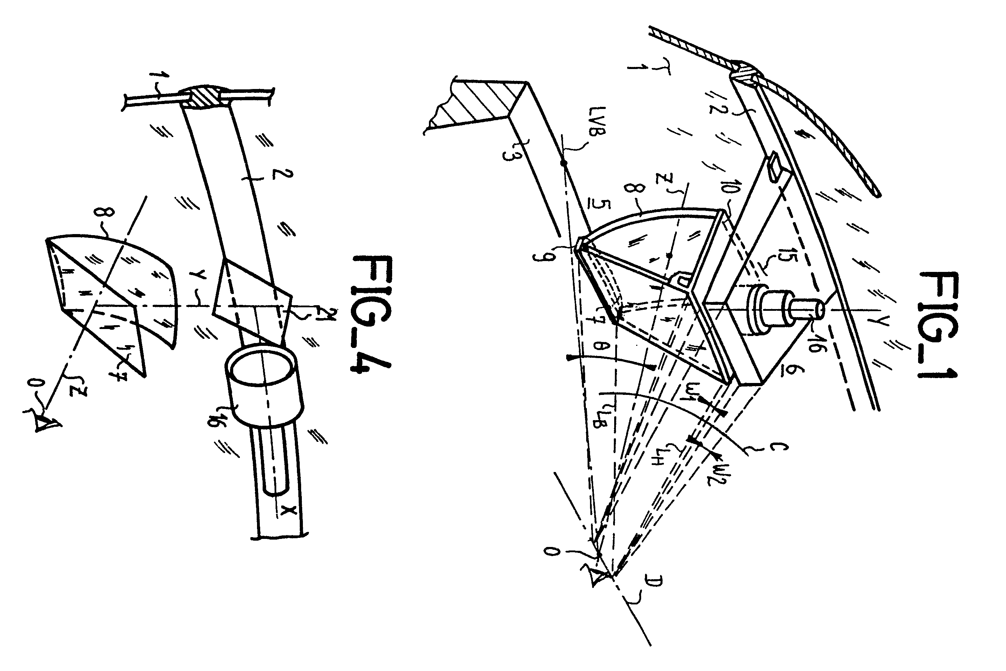

En se reportant à la Fig. 1, le viseur de tête-haute est monté à la partie supérieure de la cabine d'un hélicoptère entre la verrière 1 soutenue par des montants, tel l'élément 2, et l'observateur qui est symbolisé par un œil positionné au point 0. La planche de bord 3 détermine la limite de visibilité basse LVB pour l'observation à partir de 0 du paysage extérieur à travers la verrière. La position 0 de l'observateur est prédéterminée par la configuration de l'habitacle équipé et donc, du type d'aéronef. Le viseur est prévu en conséquence. Le cercle C délimite une zone de débattement libre à partir de 0 pour la tête du pilote, zone qui doit donc rester vide de tout équipement.

Le viseur se compose d'un module optique 5 de collimation et de combinaison surmonté d'un module électronique 6.

Le module optique 5 est situé dans un champ d'observation à partir de 0 et passant à travers la verrière 1; les directions LH et LB représentent les limites de visualisation haute et basse respectivement. Le champ d'observation de l'image collimatée présente donc un champ vertical d'angle correspondant qui peut atteindre aisément une vingtaine de degré ce qui permet une exploitation poussée (utilisation comme collimateur de vol, affichage de données de vol, d'informations d'approche et d'atterrissage . . .).

Le module optique 5 se compose d'une structure optique à deux éléments partiellement transparents, un miroir plan 7 et un miroir sphérique 8. Une lame fine 9 constitue avec un collage approprié les moyens de fixation des éléments optiques 7 et 8 à leur extrémité inférieure où ils sont juxtaposés. La lame 9 est de faible épaisseur selon le sens vertical Y représenté afin de n'introduire pratiquement pas d'effet de masque pour l'observation à partir de 0; elle sera en outre de préférence exécutée en matériau transparent pour renforcer encore cette impression d'absence de masque dans le champ de vision. Une pièce mécanique 10 est utilisée à la partie supérieure pour coupler les extrémités opposées des miroirs, éloignées l'une de l'autre, en sorte de supporter l'ensemble et le solidariser avec le module électronique 6. La pièce 10 est de faible épaisseur et peut être assimilée à un plan incliné par rapport à l'axe optique Z du système de manière à passer sensiblement par le point 0 les faces supérieure et inférieure de cette pièce peuvent être parallèles, ou mieux, usinées en sorte de former un dièdre dont l'arête D passe par 0. Ainsi le champ d'observation w1 correspondant est très faible pour la vision extérieure et il n'intervient pas, de toute façon, pour la perception de l'image collimatée, étant situé au dessus de la limite de visualisation haute LH. Le miroir sphérique 8 peut être un élément optique conventionnel, ou bien un élément optique holographique jouant un rôle équivalent. Le miroir 8 est utilisé sur l'axe ce qui permet de minimiser les aberrations rencontrées lors d'une utilisation hors d'axe ou quasi-axiale; le centre de courbure se situe au point 0 correspondant à l'emplacement optimal de lœil sur l'axe optique Z du système optique, ceci permet de limiter les aberrations de champ (coma, astigmatisme).

La structure triangulaire constituée par les éléments optiques 7, 8 et les fixations 9 et 10 présente une rigidité élevée et une bonne tenue aux vibrations. On remarque ainsi que cette structure est totalement transparente, du moins toute sa partie utile située au dessous de la pièce de liaison 10 pour la visualisation de l'image collimatée.

A cet avantage et celui d'une utilisation sur l'axe du miroir 8, il y a lieu de rajouter d'autres avantages résultant de la position inclinée vers l'avant du miroir 7 dont l'arête inférieure se trouve plus éloignée du point 0 que l'arête supérieure. Cette disposition permet au pilote de se baisser fortement vers l'avant sans risque de heurter une arête vive de l'optique ou du viseur. En outre, la réflexion des rayonnements parasites, notamment du rayonnement solaire est pratiquement évitée avec cette inclinaison du miroir vers l'avant.

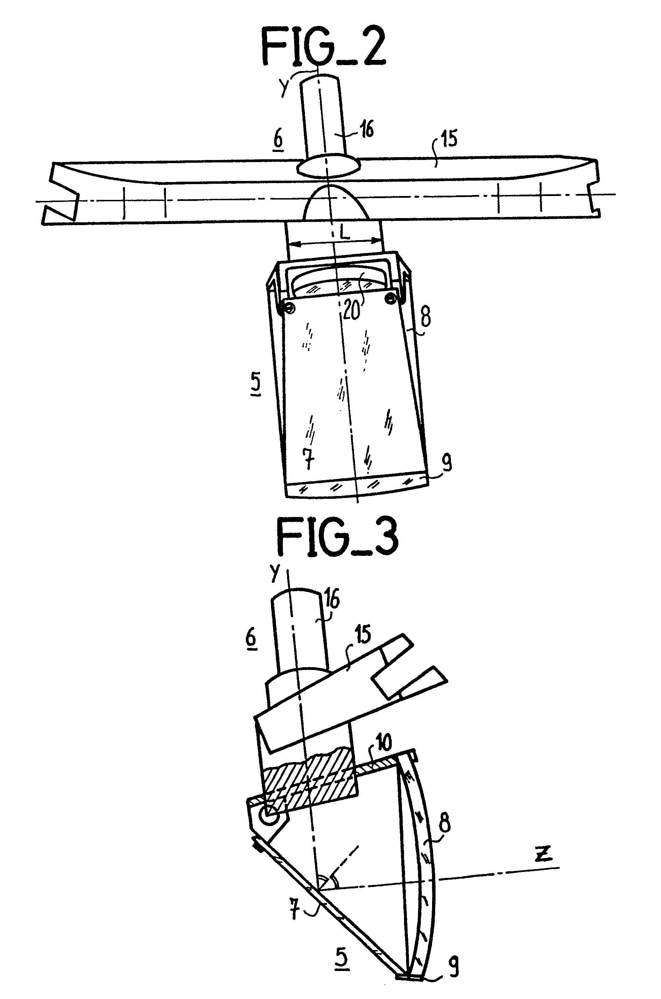

Il y a lieu de rajouter encore que les bords latéraux des glaces 7 et 8 peuvent être découpées comme il est visible sur la Fig. 2 de façon à être dans deux plans verticaux formant un dièdre coupant la droite D à faible distance de part et d'autre du point 0. Ainsi le confort de la vision est accru.

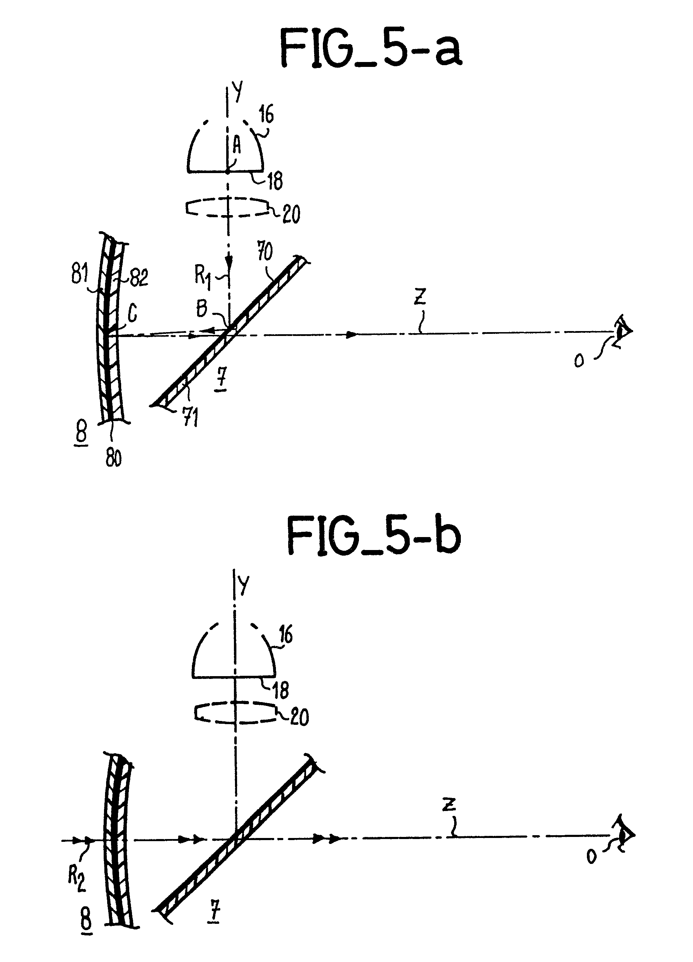

Le module électronique 6 comporte un coffret 15 de circuits et un tube cathodique en 16. Le miroir sphérique 8 travaillant sur l'axe, doit voir le tube 16 par réflexion sur la glace 7. L'inclinaison de cette dernière sur l'axe Y du tube (axe passant par le centre de l'écran) permet d'obtenir la direction Z passant par 0 et constituant l'axe optique du système sur lequel est centré le miroir 8. Cette direction Z peut être choisie coïncidant avec l'axe longitudinal RLF de l'aéronef ou légèrement décalé comme c'est le cas ici, vers les sites hauts. Il en résulte pour le tube 16, à moins d'utiliser un autre renvoi optique ce qui n'est pas exclu (Fig. 4), la position sensiblement verticale figurée dans cet exemple.

Le boîtier 15 du coffret électronique 6 est fixé au montant 2 et sa forme est conçue pour qu'il soit totalement compris dans le masque d'ouverture w2 créé par ce montant en l'observant du point 0. Le point de fuite des faces inférieure et supérieure du boîtier passant par 0 constitue une réalisation préférentielle. Le tube 16 considéré monté dans un blindage est fixé au boîtier et ce blindage est par ailleurs rendu solidaire de la pièce 10 pour supporter le module optique. Les moyens (visserie, boulons, etc...) nécessaires à la fixation de ces éléments entre eux et de l'ensemble au montant 2 n'ont pas été figurés, par souci de simplification et parce que relevant du savoir faire.

Dans la version représentée Fig 1, seuls la pièce 10 et une partie du tube cathodique 16 sont hors du masque du montant 2. Etant donné la position verticale du tube 16 et si ses dimensions latérales (L, Fig. 2) restent inférieures à la distance interpupillaire (6,5 cm environ), on peut considérer qu'il ne produit pas de masque en vision binoculaire pour observer des points suffisamment éloignés ou le fond du paysage. Il y a lieu de noter que l'espace entre les champs w1 et w2 peut être réduit voire annulé dans la mesure ou la pièce de liaison 10 est intégré à la paroi inférieure du boîtier 15.

La Fig. 2 et 3 montrent le viseur seul de la Fig. 1, en vue de face et en vue transversale respectivement. Les mêmes éléments portent les mêmes numéros de référence.

La surface focale du miroir sphérique 8 étant également sphérique, la face avant du tube cathodique doit avoir la même courbure que la surface focale du miroir 8. Si cette condition ne peut être réalisée ou approximée de manière suffisante, il y a lieu de prévoir une lentille correctrice de champ. Cette lentille 20 visible sur la Fig. 2 est placée au voisinage de la face avant pour lui donner la bonne courbure.

La Fig. 4 représente une autre disposition possible du tube 16 à axe horizontal disposé le long du montant 2 supposé également horizontal. Le coffret 15 n'a pas été figuré, le tube peut y être disposé. Un miroir totalement réfléchissant 21 est rajouté pour renvoyer l'axe X selon la direction verticale Y précitée.

Les Figs 5A et 5B illustrent le mode de fonctionnement de l'optique. On considère l'élément optique 8 de type holographique étant entendu qu'il peut s'agir d'une optique en verre classique. Le réseau diffracteur ou hologramme 80 se trouve de préférence disposé en sandwich entre deux verres courbes 81 et 82. Le miroir plan partiellement réfléchissant 7 est constitué par une lame 71 et une couche réflectrice 70 disposée sur une face.

En appelant R le rayon de courbure de l'optique sphérique constituée par l'élément 8, on dispose à une distance AB+BC=R/2 de celui-ci la surface comportant les objets lumineux à collimater, ici l'écran 18 du tube cathodique 16, l'observateur en 0 se trouvant à la distance 0C=R de l'optique sphérique 8 sur l'axe Z.

Le rayonnement issu de l'écran 18 peut être inclus dans une bande spectrale bien délimitée de longueur d'ondes, l'écran étant, par exemple dans le cas d'un tube monochrome, constitué par un revêtement de luminophores qui émettent un rayonnement dans le vert. Ce rayonnement est symbolisé par le rayon axial R1 sur la Fig. 5A. Il est partiellement réfléchi par le miroir 7 incliné sur l'axe Y du tube 16, selon la direction BC correspondant à l'axe optique Z du système. L'élément diffracteur 8 renvoie ensuite le rayonnement vers le point 0 où se trouve placé l'œil de l'observateur étant entendu que la couche 80 répond à des valeurs d'angle d'incidence et à une réflexion sélective des longueurs d'ondes correspondant au rayonnement vert R1 émis par l'écran 18. Pour faciliter la compréhension un léger écart angulaire a été figuré entre la direction BC et le retour CO; ce rayonnement réfléchi par l'optique 8 est soumis ensuite à traversée de la glace 7.

Le rayonnement R2 en provenance de l'extérieur (Fig. 5B) traverse successivement les deux éléments optiques 8 et 7, étant entendu que l'élément 8 n'introduit pratiquement pas d'atténuation pour ce rayonnement visible excepté pour les longueurs d'ondes tombant dans le spectre étroit du rayonnement R1.

La solution à optique diffractive 8 permet, par l'enregistrement sélectif représenté par l'hologramme 80, de réduire au minimum les pertes par transmission du rayonnement R2 qui assombrissent la vision du paysage. L'enregistrement est effectué selon des techniques connues et permet d'obtenir un réseau diffractif adapté à la bande spectrale étroite du tube cathodique ainsi qu'aux valeurs d'incidence prévues. En outre, l'enregistrement peut être opéré pour faire converger le rayonnement R1 de l'image collimatée réfléchi en direction de la pupille de l'œil en 0. Ceci permet de compenser notablement les pertes inévitables dans un système centré sur l'axe et subies à la réflexion en B sur 7 et à la transmission ensuite à travers cette glace. Le verre 82 support de l'enregistrement est un verre courbe, sphérique ou asphérique. L'élément diffractif 8 peut en outre avoir des propriétés de miroir non sphérique, permettant éventuellement une amélioration des caractéristiques optiques de collimation. Ceci dépend des conditions de réalisation de cet élément, choisies en conséquence.

L'utilisation d'une optique diffractive permet d'obtenir à la fois un rendement satisfaisant (par exemple 15%) de l'ensemble glace-miroir 7–8 pour la longueur d'onde d'émission du tube cathodique (Fig. 5A), ce qui assure une luminosité satisfaisante des symboles, et une bonne transparence (par exemple 70 à 80%) pour la vision du paysage extérieur (Fig. 5B).

Ceci résulte de la propriété photométrique de sélectivité spectrale d'un hologramme qui est réfléchissant pour une longueur d'onde (celle d'émission du phosphore du tube cathodique) et transparent pour le reste du spectre visible.

Ce type de système optique permet d'obtenir: un champ total important tout en conservant une bonne qualité de collimation, un champ instantané maximum compte-tenu des contraintes liées à la cabine de l'hélicoptère, un bon dégagement des zones de visibilité du paysage autour de la zone de visée (aucune pièce mécanique au dessous de la fixation), et une faible atténuation du paysage extérieur.

Le viseur peut fournir un champ total 0 circulaire (correspondant à un écran 18 circulaire) de diamètre angulaire 20°.

La solution préférée consiste à placer verticalement le tube à rayons cathodiques comme représenté sur la Fig. 1.

L'électronique de commande 15 du tube est disposée selon une configuration à plat dans l'angle mort formé par l'arceau 2 de la verrière, d'ou aucune gêne supplémentaire pour le pilote. L'électronique disposée à plat permet un accès facile et une maintenance aisée du viseur clair.

La gêne apportée au copilote en vision latérale peut être réduite au minimum si l'électronique de commande 3 se confond avec un élément latéral, par exemple un montant de portière dont est prévu l'hélicoptère latéralement.

La solution à miroir sphérique avec un traitement partiellement réfléchissant classique suffit dans le cas d'une application avec une symbologie moins chargée permettant donc un rafraîchissement cathodique plus fréquent.

L'électronique de commande 15 peut être déportée dans le cas d'applications multiples du viseur, par exemple pour un montage sur des types d'hélicoptères différents.

Parmi d'autres variantes, on peut considérer aussi le remplacement du tube par un autre moyen (écrans à cristaux liquides, matrice de diodes électroluminescentes, etc. . . .).

**Revendications**

1. Viseur tête haute, montée en position haute, comportant deux miroirs partiellement transparents, l'un sphérique et l'autre plan, dont les extrémités inférieures sont rapprochées et les extrémités supérieures distantes, en sorte de collimater des données lumineuses et permettre leur observation superposée avec la vision du paysage extérieur, des moyens électroniques produisant les données à visualiser, et un boîtier supportant l'ensemble et permettant sa fixation au véhicule porteur, ledit viseur étant caractérisé en ce que lesdites extrémités inférieures sont assemblées par une pièce (9) de faible épaisseur, lesdites extrémités supérieures sont couplées mécaniquement au boîtier par l'intermédiaire d'une pièce de liaison (10) également de faible épaisseur contenue dans un plan passant par les extrémités supérieures et qui coupe l'axe optique en un point d'observation (O) correspondant au centre du miroir sphérique (8) en sorte d'utiliser celui-ci sur l'axe et de n'avoir pratiquement aucun effet de masque par les moyens optiques dans le champ d'observation situé au-dessous de cette plaque, lesdits moyens électroniques étant, au moins partiellement, contenus dans ledit boîtier (15) dont la forme est prédéterminée pour être situé dans un espace déjà masqué pour l'observation du paysage à partir dudit centre, par la présence d'une pièce opaque appartenant au véhicule porteur.

2. Viseur selon la revendication 1, caractérisé en ce que ledit espace est délimité par un dièdre dont l'arête passe par ledit centre.

3. Viseur selon la revendication 1 ou 2 et utilisant un tube cathodique de visualisation (16) pour produire les données lumineuses sur l'écran cathodique disposé dans le plan focal des moyens optiques de collimation, caractérisé en ce que le tube est disposé vertical et transversal au boîtier qu'il traverse, et est couplé mécaniquement côté écran à la pièce de liaison des miroirs.

4. Viseur selon la revendication 1 ou 2 et utilisant un tube cathodique de visualisation (16) pour produire les données lumineuses sur l'écran cathodique disposé dans le plan focal des moyens optiques de collimation, caractérisé en ce que le tube est disposé horizontal, contenu sensiblement dans le boîtier (15), et que les moyens optiques comportent en outre un miroir de renvoi (21) de l'image de l'écran vers le miroir plan.

5. Viseur selon la revendication 3 ou 4, caractérisé en ce que les moyens optiques comportent en outre une lentille correctrice de champ (20) pour corriger la courbure de la face avant du tube cathodique.

6. Viseur selon l'une quelconque des revendications précédentes, caractérisé en ce que le miroir sphérique et le miroir plan sont réunis en leurs extrémités inférieures au moyen d'une lame mince transparente collée (9).

7. Viseur selon l'une quelconque des revendications précédentes, caractérisé en ce que le miroir sphérique est constitué par un miroir holographique (80, 81, 82) déterminé de manière à minimiser les pertes par réflexion et par transmission des rayonnements respectifs.

8. Viseur selon la revendication 7, caractérisé en ce que le miroir holographique a des propriétés de miroir non sphérique, déterminées de manière à minimiser les abérrations optiques et à améliorer la qualité de collimation.

9. Viseur selon l'une quelconque des revendications 1 à 8 utilisé sur un hélicoptère, caractérisé en ce que le boîtier épouse la forme du masque créé par une partie d'un montant (2) supportant la verrière (1), en sorte que le viseur lui-même n'introduit pratiquement pas de masque pour l'observation à partir dudit centre.

**Patentansprüche**

1. Head-up-Sichtgerät, das in Hochstellung montiert ist und zwei halbtransparente Spiegel besitzt, nämlich einen sphärischen und einen ebenen Spiegel, deren untere Enden einander angenähert sind und deren obere Enden voneinander entfernt liegen, derart, dass Leuchtdaten kollimatiert werden und ihre Betrachtung in Überlagerung mit der Ansicht der äusseren Landschaft möglich ist, wobei elektronische Mittel die anzuzeigenden Daten erzeugen und ein Gehäuse das Ganze trägt und seine Befestigung am Fahrzeug erlaubt, dadurch gekennzeichnet, dass die unteren Enden durch ein Bauteil (9) geringer Dikke zusammengefügt sind, dass die oberen Enden mechanisch mit dem Gehäuse über ein Verbindungsglied (10) von ebenfalls geringer Dicke gekoppelt sind, das in einer durch die oberen Enden verlaufenden und die optische Achse in einem Beobachtungspunkt (0) entsprechend dem Zentrum des sphärischen Spiegels (8) schneidenden Ebene liegt, so dass dieser Spiegel in der Achse verwendet wird und praktisch kein Maskeneffekt durch die optischen Mittel im Beobachtungsfeld unterhalb dieser Platte vorliegt, wobei die elektronischen Mittel zumindest teilweise in dem Gehäuse (15) enthalten sind, dessen Form so gewählt ist, dass es in einem bereits für die Beobachtung der Landschaft ausgehend von diesem Zentrum maskierten Bereich liegt, und zwar aufgrund der Anwesenheit eines lichtundurchlässigen Bauteils, das zum Fahrzeug gehört.

2. Sichtgerät nach Anspruch 1, dadurch gekennzeichnet, dass der Raum durch einen Zweiflächler begrenzt ist, dessen Kante durch das genannte Zentrum verläuft.

3. Sichtgerät nach Anspruch 1 oder 2 unter Verwendung einer Kathodenstrahl-Bildschirmröhre (16) zur Erzeugung der Leuchtdaten auf dem Bildschirm, der in der Brennebene der optischen Kollimationsmittel liegt, dadurch gekennzeichnet, dass die Röhre senkrecht und quer zum Gehäuse, das sie durchquert, angeordnet ist und mechanisch auf der Seite des Schirms mit dem die Spiegel verbindenden Glied gekoppelt ist.

4. Sichtgerät nach Anspruch 1 oder 2 unter Verwendung einer Kathodenstrahl-Bildschirmröhre (16) zur Erzeugung der Leuchtdaten auf dem Bildschirm, der in der Brennebene der optischen Kollimationsmittel liegt, dadurch gekennzeichnet, dass die Röhre horizontal angeordnet ist und im wesentlichen im Gehäuse (15) enthalten ist und dass die optischen Mittel ausserdem einen Spiegel (21) zur Umlenkung des Bildschirmbilds zum ebenen Spiegel hin aufweisen.

5. Sichtgerät nach Anspruch 3 oder 4, dadurch gekennzeichnet, dass die optischen Mittel ausserdem eine Feldkorrekturlinse (20) zur Korrektur der Krümmung der Bildschirmfläche der Kathodenstrahlröhre besitzen.

6. Sichtgerät nach einem beliebigen der vorhergehenden Ansprüche, dadurch gekennzeichnet, dass der sphärische und der ebene Spiegel mit ihren unteren Enden über eine aufgeklebte dünne transparente Lamelle (9) miteinander verbunden sind.

7. Sichtgerät nach einem beliebigen der vorhergehenden Ansprüche, dadurch gekennzeichnet, dass der sphärische Spiegel aus einem solchen holographischen Spiegel (80, 81, 82) besteht, dass die Verluste durch Reflexion und Durchlass der jeweiligen Strahlungen geringgehalten werden.

8. Sichtgerät nach Anspruch 7, dadurch gekennzeichnet, dass der holographische Spiegel nicht-sphärische Spiegeleigenschaften besitzt, die so festgelegt sind, dass die optischen Aberrationen geringgehalten werden und die Kollimationsqualität verbessert wird.

9. Sichtgerät nach einem beliebigen der Ansprüche 1 bis 8 zur Verwendung in einem Hubschrauber, dadurch gekennzeichnet, dass das Gehäuse der Form der Maske angepasst ist, die durch einen Teil einer Sprosse (2) der Verglasung (1) gebildet wird, derart, dass das Sichtgerät selbst praktisch keine Maskierung für die Betrachtung vom genannten Zentrum aus einführt.

## Claims

1. A head-up display, mounted in a high position and comprising two semitransparent mirrors, a spherical one and a plane one, the lower ends of which are close and the upper ends distant to each other, such that light data are collimated and their observation in a superposed combination with the outer landscape is possible, electronic means producing the data to be displayed and a casing supporting these elements and allowing them to be attached to the supporting vehicle, said display being characterized in that said lower ends are assembled by a piece (9) having a small thickness, that said upper ends are mechanically coupled to the casing through a linking piece (10) which is equally of small thickness, which is contained in a plane passing through the upper ends and which intersects the optical axis in an observation point (0) corresponding to the center of the spherical mirror (8) such that the latter is used along the axis and that there does practically not exist any masking effect by the optical means in the observation field located under this plate, said electronic means being at least partially contained in said casing (15), the shape of which is predetermined as to be located in a space which is already masked for the observation of the landscape from the center by the presence of an opaque piece belonging to the supporting vehicle.

2. A display according to claim 1, characterized in that said space is limited by a dihedron, the edge of which passes through said center.

3. A display according to claim 1, or 2, using a cathode ray tube for the display (16) in order to generate the light data on the cathode ray tube screen disposed in the focal plane of the optical collimation means, characterized in that the tube is disposed vertically and transversally to the casing through which it passes, and it is mechanically coupled on the side of the screen to the mirror linking piece.

4. A display according to claim 1 or 2 using a display cathode ray tube (16) in order to generate the light data on the cathode tube screen which is disposed in the focal plane of the optical collimation means, characterized in that the tube is disposed horizontally and is contained substantially in the casing (15), and that the optical means further comprise a mirror (21) for deflecting the screen picture to the plane mirror.

5. A display according to claims 3 or 4, characterized in that the optical means further comprise a field correction lens (20) for correcting the curvature of the cathode tube front surface.

6. A display according to any one of the preceding claims, characterized in that the spherical mirror and the plane mirror are interconnected at their lower ends by means of a thin transparent glued blade (9).

7. A display according to any one of the preceding claims, characterized in that the spherical mirror is constituted by a holographic mirror (80, 81, 82) which is determined in such a way that the reflection and transmission losses of the respective radiations are minimized.

8. A display according to claim 7, characterized in that the holographic mirror has properties of a non-spherical mirror which are determined in such a way that the optical aberrations are minimized and that the collimation quality is improved.

9. A display according to any one of claims 1 to 8, used on a helicopter, characterized in that the casing is adapted to the shape of the mask created by a portion of a muntin (2) supporting the glasswork (1) such that the display itself does not introduce any substantial mask effect for the observation from said center.

# FIG_1

# FIG_4

# FIG_2

# FIG_3

FIG_5-a

FIG_5-b